(19) **Europäisches Patentamt**
**European Patent Office**
**Office européen des brevets**

(11) **EP 3 583 179 B1**

(12) **EUROPÄISCHE PATENTSCHRIFT**

(45) Veröffentlichungstag und Bekanntmachung des Hinweises auf die Patenterteilung:
**20.01.2021 Patentblatt 2021/03**

(21) Anmeldenummer: **18705596.7**

(22) Anmeldetag: **13.02.2018**

(51) Int Cl.:
***C09J 7/38*** *(2018.01)*

(86) Internationale Anmeldenummer:
**PCT/EP2018/053503**

(87) Internationale Veröffentlichungsnummer:
**WO 2018/149806 (23.08.2018 Gazette 2018/34)**

(54) **VERFAHREN ZUR STEIGERUNG DER KLEBKRAFT VON HAFTKLEBMASSEN**

METHOD FOR INCREASING THE ADHESIVE FORCE OF AN ADHESIVE

PROCÉDÉ POUR AUGMENTER LA FORCE D'ADHÉRENCE DE COMPOSITIONS ADHÉSIVES DE CONTACT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.02.2017 DE 102017202509**

(43) Veröffentlichungstag der Anmeldung:
**25.12.2019 Patentblatt 2019/52**

(73) Patentinhaber: **TESA SE**
**22848 Norderstedt (DE)**

(72) Erfinder:
• **KOOPS, Arne**
**23881 Neu-Lankau (DE)**
• **KRAMP, Stefan**
**Hamburg (DE)**
• **HERRMANN, Alexander**
**22529 Hamburg (DE)**

(74) Vertreter: **tesa SE**
**Hugo-Kirchberg-Straße 1**
**22848 Norderstedt (DE)**

(56) Entgegenhaltungen:
**WO-A1-94/09079     WO-A2-2012/152710**

EP 3 583 179 B1

**Beschreibung**

Die Erfindung liegt auf dem technischen Gebiet der Haftklebmassen, wie sie vielfältig in Klebebändern zum temporären oder permanenten Verbinden von Substraten, beispielsweise von Bauteilen, verwendet werden. Spezifischer betrifft die Erfindung ein Verfahren zur Steigerung der Klebkraft von Haftklebmassen mittels einer physikalischen Behandlungsmethode, wobei die Haftklebmasse mit einem Releaseliner bedeckt ist.

Unter einer Haftklebemasse bzw. einem Haftklebstoff wird erfindungsgemäß, wie im allgemeinen Sprachgebrauch üblich, ein Stoff verstanden, der zumindest bei Raumtemperatur dauerhaft klebrig sowie klebfähig ist. Charakteristisch für einen Haftklebstoff ist, dass er durch Druck auf ein Substrat aufgebracht werden kann und dort haften bleibt, wobei der aufzuwendende Druck und die Einwirkdauer dieses Drucks nicht näher definiert werden. Im allgemeinen, grundsätzlich jedoch abhängig von der genauen Art des Haftklebstoffs, der Temperatur und der Luftfeuchtigkeit sowie des Substrats, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines höheren Drucks notwendig sein.

Haftklebemassen haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad der Haftklebemasse als auch von der Geschwindigkeit und Dauer der Deformation sowie von der Temperatur. Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Auffließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander werden die mittels Dynamisch Mechanischer Analyse (DMA) ermittelbaren Größen Speichermodul (G') und Verlustmodul (G") herangezogen. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel $\delta$ bezeichnet. Der Speichermodul G' ist wie folgt definiert: $G' = (\tau/\gamma) \cdot \cos(\delta)$ ($\tau$ = Schubspannung, $\gamma$ = Deformation, $\delta$ = Phasenwinkel = Phasenverschiebung zwischen Schubspannungs- und Deformationsvektor). Die Definition des Verlustmoduls G" lautet: $G" = (\tau/\gamma) \cdot \sin(\delta)$ ($\tau$ = Schubspannung, $\gamma$ = Deformation, $\delta$ = Phasenwinkel = Phasenverschiebung zwischen Schubspannungs- und Deformationsvektor).

Eine Masse gilt im Allgemeinen als Haftklebemasse und wird im Sinne der Erfindung als solche definiert, wenn bei 23°C im Deformationsfrequenzbereich von 100 bis 101 rad/sec sowohl G' als auch G" zumindest zum Teil im Bereich von 103 bis 107 Pa liegen. "Zum Teil" heißt, dass zumindest ein Abschnitt der G'-Kurve innerhalb des Fensters liegt, das durch den Deformationsfrequenzbereich von einschließlich 100 bis einschließlich 101 rad/sec (Abszisse) sowie den Bereich der G'-Werte von einschließlich 103 bis einschließlich 107 Pa (Ordinate) aufgespannt wird, und dass zumindest ein Abschnitt der G"-Kurve ebenfalls innerhalb des entsprechenden Fensters liegt.

Um eine hinreichende Kohäsion der Haftklebemassen zu erreichen, werden die Haftklebemassen in der Regel vernetzt; das heißt, die einzelnen Makromoleküle werden durch Brückenbindungen miteinander verknüpft. Die Vernetzung kann auf unterschiedliche Weisen geschehen; so gibt es physikalische, chemische und thermische Vernetzungsmethoden.

Gerade um ein Abfließen (ein Herunterlaufen) der Haftklebemassen vom Substrat zu verhindern und eine genügende Stabilität der Haftklebemasse im Klebeverbund zu garantieren, ist eine hinreichende Kohäsion der Haftklebemassen erforderlich. Für gute Adhäsionseigenschaften müssen die Haftklebemassen aber andererseits in der Lage sein, auf das Substrat aufzufließen und eine hinreichende Benetzung der Substratoberfläche zu garantieren. Um Brüche innerhalb der Verklebungsfuge (innerhalb der Haftklebemassenschicht) zu vermeiden, ist zudem eine gewisse Elastizität der Haftklebemasse erforderlich.

Weiterhin ist für die Adhäsion neben der Benetzung der Oberfläche auch die Art der Wechselwirkung wichtig, also die spezifische Wechselwirkungsenergie der Grenzflächen von Klebmasse und Substrat. Diese ist durch die chemische Natur der Oberflächen dominiert. Haftklebemassen müssen hier einen Konflikt zwischen ihrer Rheologie, also den Eigenschaften ihres Volumens, und ihrem Haftvermögen, also einer Mischung aus Volumen- und Oberflächeneigenschaften, bewältigen.

Für die Verwendung beispielsweise in der Automobilindustrie und der Elektronikindustrie werden an Selbstklebebänder hohe Leistungsanforderungen gestellt. Wichtige Kriterien beinhalten hierbei eine gute Verklebungsfestigkeit, insbesondere eine hohe Scherfestigkeit, eine hohe Alterungsbeständigkeit und nicht zuletzt die elektronische Verträglichkeit. Für entsprechende Anwendungen werden daher vornehmlich Selbstklebebänder auf Basis von hochvernetzten Polyacrylatklebmassen genutzt. Sehr oft werden beidseitig klebende Klebebänder zur meist permanenten Verbindung von Bauteilen benutzt.

Solche doppelseitig klebenden Selbstklebebänder werden vielfältig zum Fixieren und zum Verbinden von verschiedensten Materialien verwendet. So werden heute eine Vielzahl von unterschiedlichen Selbstklebebändern zum Beispiel in der Automobilindustrie zum Verkleben von Tür- und Zierleisten und in der Elektronikindustrie zum Verkleben von Displays, Batterien oder Lautsprechern unter anderem in mobilen Telefonen, Digitalkameras oder Pocket-Computern eingesetzt. Durch die Verwendung von Haftklebebändern können die einzelnen technischen Bauteile Platz sparender, deutlich schneller und damit effizienter und kostengünstiger montiert werden.

Für diverse Anwendungsgebiete, beispielsweise im Bausektor, in der industriellen Fertigung von technischen Produkten oder für Montagezwecke werden zunehmend dicke, aber stark klebende Klebebänder benötigt. Da die Verklebungen häufig im Außenbereich stattfinden beziehungsweise die verklebten Produkte äußeren Witterungseinflüssen ausgesetzt sind, sind die Erwartungen an die Eigenschaften derartiger Klebebänder häufig hoch: so soll die Verklebung stark, dauerhaft und witterungsbeständig sein; gefordert wird vielfach eine hohe Feuchtigkeits-, Wärme- und Feuchtwärmebeständigkeit; vorteilhaft sollen die Klebebänder Unebenheiten in der Verklebungsfuge beziehungsweise auf den zu verklebenden Untergründen ausgleichen können, und zunehmend wird auch für dicke Klebebänder eine hohe Transparenz gewünscht (etwa im Bereich der Verklebung von transparenten Materialien wie Gläsern oder Transparenz-Kunststoffen). Auch hier ist die Verwendung von hochvernetzten Polyacrylatklebmassen üblich.

Die Klebebänder, die für derartige Zwecke eingesetzt werden, sind für gewöhnlich mit Klebemassen ausgerüstet, bei denen die klebtechnischen Eigenschaften besonders gut abgestimmt sein müssen. So müssen Kohäsion, Anfassklebrigkeit (auch als "Tack" bezeichnet), Fließverhalten und andere Eigenschaften sehr genau justiert werden. Da die technischen Ausformungen der Haftklebemasse, die diese Eigenschaften beeinflussen, auf die einzelnen Eigenschaften häufig gegenläufige Auswirkungen haben, ist die Abstimmung in der Regel schwierig, oder es müssen Kompromisse im Ergebnis hingenommen werden. So ist es beispielsweise problematisch, besonders scherfeste Klebmassen zusätzlich auf Adhäsion zu optimieren.

Beispielsweise zeigt sich die Problematik der mangelnden Adhäsion stark vernetzter Acrylatklebemassen bei der Laminierung mehrlagiger Klebebänder. Eine solche Laminierung funktioniert recht gut bei nicht vernetzten Haftklebmassen wie zum Beispiel Klebmassen auf Basis von Polyisobutylen, physikalisch vernetzten Haftklebmassen wie zum Beispiel Klebmassen auf Basis von Styrol-Block-Copolymeren, insbesondere wenn hier die Laminierung bei erhöhter Temperatur erfolgt, oder wenig vernetzten Haftklebmassen wie zum Beispiel Klebmassen auf Basis von gering vernetztem Naturkautschuk. Die Laminierung vernetzter Acrylat-Haftklebmassen-Schichten führt hingegen häufig zu einem Laminat mit einem verschlechterten Eigenschaftsprofil aufgrund geringer Kaschier- beziehungsweise Verbundfestigkeit der Schichten. Vermutet wird, dass die Polymerketten der Acrylat-Haftklebemasse aufgrund eines ihres Vernetzungsgrades nicht fähig sind, Verschlaufungen genügender Länge an der Grenzfläche zu bilden. Dieser Umstand wird sogar bei einigen Produkten gezielt genutzt, um ein doppelseitiges Selbstklebeband ohne Trennmaterial (Trennpapier oder Trennfolie) als Rollenware anzubieten, so dass zwei Lagen der Polyacrylat-Haftklebemasseschicht direkt in dauerhaften Kontakt kommen. Das Abwickeln dieser Produkte ist auch noch nach Jahren der Lagerung ohne Probleme möglich. tesafix® 56661 ist ein Beispiel für ein solches Produkt.

Insbesondere für den Bereich der Hochleistungs- und Montageklebebänder gibt es trägerlose, viskoelastische Klebebänder. "Trägerlos" bedeutet in diesem Zusammenhang, dass keine Schicht nur für den strukturellen Zusammenhalt nötig ist, das Klebeband ist also für den spezifizierten Einsatz in sich ausreichend kohäsiv. Es ist nicht nötig, eine Trägerfolie oder ähnliches, wie Vlies oder Gewebe, zu verwenden. Auch diese Klebebänder basieren meist auf hochvernetzten Acrylatklebemassen. Des Weiteren sind diese Haftklebebänder meistens verhältnismäßig dick, typischerweise über 300 μm.

Eine so bezeichnete viskoelastische Polymerschicht kann als sehr hochviskose Flüssigkeit angesehen werden, die unter Druckbelastung das Verhalten des Fließens (auch als "Kriechen" bezeichnet) zeigt. Solche viskoelastischen Polymere beziehungsweise eine solche Polymerschicht besitzen in besonderem Maße die Fähigkeit, bei langsamer Krafteinwirkung die auf sie einwirkenden Kräfte zu relaxieren: sie sind in der Lage, die Kräfte in Schwingungen und/oder Verformungen (die insbesondere auch - zumindest zum Teil - reversibel sein können) zu dissipieren, somit die einwirkenden Kräfte "abzupuffern" und eine mechanische Zerstörung durch die einwirkenden Kräfte bevorzugt zu vermeiden, vorteilhaft aber mindestens zu verringern oder aber den Zeitpunkt des Eintretens der Zerstörung zumindest hinauszögern. Im Falle einer sehr schnell einwirkenden Kraft zeigen viskoelastische Polymere üblicherweise ein elastisches Verhalten, also das Verhalten einer vollständig reversiblen Verformung, wobei Kräfte, die über das Elastizitätsvermögen der Polymere hinausgehen, zu einem Bruch führen können. Im Gegensatz hierzu stehen elastische Materialien, die auch bei langsamer Krafteinwirkung das beschriebene elastische Verhalten zeigen. Durch Beimischungen, Füllstoffe, Schäumung oder ähnliches können solche viskoelastischen Klebmassen in ihren Eigenschaften noch stark variiert werden.

Aufgrund der elastischen Anteile der viskoelastischen Polymerschicht, die wiederum wesentlich zu den klebtechnischen Eigenschaften von Klebebändern mit einer viskoelastischen Trägerschicht beitragen, kann die Spannung zum Beispiel einer Zug- oder Scherbeanspruchung nicht komplett relaxieren. Dies wird durch das Relaxationsvermögen ausgedrückt, welches definiert ist als

$$((\text{Spannung } (t=0) - \text{Spannung } (t)/ \text{Spannung } (t=0))*100\%.$$

Typischerweise zeigen viskoelastische Trägerschichten ein Relaxationsvermögen von mehr als 50 %.
Wiewohl viele Klebmassen viskoelastischer Natur sind, werden für trägerlose Hochleistungs-Klebebänder bevorzugt Klebmassen eingesetzt, welche diese besonderen Relaxierungseigenschaften zeigen.

Bei der Entwicklung von Klebmassen führt die Erzielung dieser besonderen Relaxierungseigenschaften bei Beibehaltung hoher Kohäsion oft zu Kompromissen mit niedriger Adhäsion und dadurch niedriger Klebkraft. Aufgrund der nötigen hohen Kohäsion ist es alles andere als trivial, scherfeste trägerlose, viskoelastische Klebebänder mit hoher Adhäsion und/oder hohem Tack herzustellen. Es zeigt sich, dass ohne den Zusatz von Klebharzen, wie sonst bei Klebmassen üblich, die Adhäsion oft unzureichend bleibt. Die Beimischung solcher Harze geht, wie jedem Fachmann bekannt ist, zu Lasten der Scherfestigkeit, was jedoch für Hochleistungsanwendungen unbedingt zu vermeiden ist.

Jedoch ist der Übergang zu "konventionellen" Klebemassen grundsätzlich fließend, insbesondere zu Transferklebebändern, und dadurch ebenso zu Klebemassen, welche typischerweise mit Trägern eingesetzt werden. Beispielsweise spricht nichts dagegen, eine als insbesondere "viskoelastisch" bezeichnete Klebmasse auch in dünner Schicht in einem konventionellen Klebeband mit Träger einzusetzen. Umgekehrt kann eine "konventionelle" Klebmasse auch in einem Dickschichtprodukt in einigen Fällen sinnvoll sein oder kann durch Beimischungen, Füllstoffe, Schäumung oder ähnliches für einen gegebenen Zweck hinreichend optimiert werden.

Bei vielen Verklebungen auf realen Oberflächen ist es zudem in der Praxis oft nötig, eine Vorbehandlung der zu verklebenden Oberflächen vorzunehmen, um hinreichende Klebkräfte zu erzielen. Falls die Oberfläche verschmutzt oder verölt ist, kann ein Primer zusammen mit einer Reinigung oder physikalischen Vorbehandlung der Oberfläche eine hinreichende Verklebung ermöglichen. Für eine physikalische Oberflächenbehandlung werden regelmäßig Plasmasysteme eingesetzt, oft in Düsengeometrie und bei Normaldruck. Der Einsatz eines Primers ist aus Gründen der Komplexität und des problematischen Auftrags häufig nicht wünschenswert.

In der Vergangenheit konnten in manchen Fällen Verbesserungen einiger Oberflächeneigenschaften einer Haftklebmasse durch "Aktivierung" ihrer Oberfläche gezeigt werden. Welche Eigenschaften dies sind und wie eine solche Verbesserung aussieht, kann sich sehr unterscheiden.
Der Begriff "Aktivierung" wird in dieser Erfindung synonym für alle Varianten von Modifikation verwendet, die nur die Oberfläche der Haftklebmasse betreffen und positiven Einfluss auf die Adhäsionseigenschaften haben. Hauptsächlich kommen dafür physikalische Methoden wie Corona, Plasma und Flamme in Frage. Der Begriff "Aktivierung" impliziert meist eine unspezifische Modifikation.
Sehr überwiegend wird jedoch nur der Verklebungsuntergrund/das Substrat behandelt und nicht der Haftklebstoff. Dementsprechend ist die Aktivierung von Klebmasseoberflächen im Stand der Technik noch nicht umfassend beschrieben.

Die DE 10 2007 063 021 A1 beschreibt eine Corona-Aktivierung von Klebmassen zur Erhöhung der Scherstandzeiten. Beschrieben wird insbesondere das Problem, dass bei UV-vernetzten Haftklebemassen ein Vernetzungsprofil auftritt mit erhöhter Vernetzung nahe der Grenzfläche und dadurch reduzierter Adhäsion. Gelehrt wird die Steigerung der Scherfestigkeit durch eine Coronabehandlung bei ansonsten praktisch gleichbleibenden klebtechnischen Eigenschaften, auch unveränderter oder sogar reduzierter Klebkraft. Dem Fachmann ist eingedenk der vorstehend beschriebenen Zusammenhänge klar, dass durch Erhöhung der Scherstandzeiten nicht trivialerweise auch eine Erhöhung der Klebkraft erreicht wird.

Des Weiteren wird in der DE 10 2006 057 800 A1 gelehrt, wie durch Aktivierung von Klebmassenoberflächen vor Laminierung in einem mehrlagigen Klebeband eine Erhöhung der Scherfestigkeit erreicht wird. Die Behandlung erfolgt auf Grenzflächen innerhalb des Produkts und dient zur Erhöhung der Interlaminathaftung. Es wird keine Erhöhung der Klebkraft des Klebebandes nachgewiesen.

Die bisher im Stand der Technik bekannten Lösungen zur Erhöhung der Klebkraft einer ausgeformten viskoelastischen Haftklebeschicht beziehen sich häufig auf das Hinzukaschieren ein oder mehrerer Schichten einer Klebmasse, so dass man einen mehrschichtigen Aufbau erhält.

WO 2006/027389 A1 lehrt einen solchen Mehrschichtaufbau, wobei vorteilhafterweise die einzelnen Schichten Corona-behandelt werden. Es wird ein dreischichtiger Aufbau aus Schichten, die jeweils unter 10 N/cm Klebkraft haben, beschrieben, wobei jedoch der Dreischichtaufbau selbst eine Klebkraft von größer als 10 N/cm aufweist.

Die offensichtlichen Nachteile eines Mehrschichtaufbaus sind der erhöhte Aufwand bei der Fertigung und die Anzahl der Prozessschritte. Bei solchen Aufbauten kann grundsätzlich Delamination zwischen den Schichten auftreten, da die Interlaminathaftung nicht auf starken kovalenten chemischen Wechselwirkungen beruht, sondern auf unspezifischen Wechselwirkungen allgemeiner, polarer Natur.

Eine Verbesserung der Interlaminathaftung in einem solchen Mehrschichtaufbau mit einem viskoelastischen Träger wird in EP 2 062 951 A1 beschrieben, wo der Effekt einer Corona-Behandlung der Klebmasseoberfläche mit den chemischen Nachreaktionen einer thermischen Vernetzung kombiniert wird. Jedoch bleiben die Nachteile der erhöhten Komplexität eines Mehrschichtaufbaus wie oben beschrieben. Zudem ist es nicht auszuschließen, dass durch Diffusion des eingesetzten Vernetzers Nachvernetzungsreaktionen auch die Eigenschaften der zukaschierten Klebmasse ungünstig verändern.

Es lässt sich also festhalten, dass die Klebkraft einer Haftklebmasseschicht - zu welchem Zweck auch immer - durch eine Aktivierung der Klebmassenoberfläche gesteigert werden kann. Beispielsweise kann dies durch eine Plasmabehandlung der Klebmassenoberfläche geschehen. Dabei wird im Stand der Technik davon ausgegangen, dass die Oberfläche für das Plasma frei zugänglich sein muss, weil ein Plasma nicht im oder durch ein Volumen hindurch Aktivierung bewirken kann. Folglich müssen die Oberflächen von Klebebändern, die üblicherweise mit Releaselinern geschützt sind, durch Entfernen des Releaseliners frei zugänglich gemacht werden. Nach der Plasmabehandlung darf die behandelte Oberfläche bis zu ihrer Applikation nicht mehr mit anderen Oberflächen in Kontakt kommen, da dies die erzeugte Funktionalisierung nachteilig beeinflussen würde. Dies bedeutet für Klebebänder von der Rolle oder als Stanzlinge, dass sie nur kurz vor ihrer Anwendung nach dem Entfernen des Releaseliners Plasma-behandelt werden können.

Darüber hinaus ist aus der WO 94/09079 A1 ein Maskierklebeband bekannt, welches zum Abdecken eines Teils einer Oberfläche während eines Hochgeschwindigkeits-Sauerstoff-Plasmaspritzverfahrens (HVOF) ausgelegt ist. Das Maskierklebeband wird aus einem Gewebe gebildet, das aus Garnen aus Aramidfasern und dabei dicht gewebt ist. Zusätzlich imprägniert ein Silikonkautschuk das Gewebe.

Es existiert ein Bedarf an vereinfachten Plasmabehandlungsmethoden für Klebebänder, mit denen sich insbesondere das vorstehend beschriebene, enge Zeitfenster für die Anwendung des Plasmas aufweiten lässt. Aufgabe der vorliegenden Erfindung ist es daher, ein Verfahren zur Plasmabehandlung einer Klebebandoberfläche zur Verfügung zu stellen, das eine gewisse zeitliche Entkopplung von Plasmabehandlung und Verwendung des Klebebandes ermöglicht. Insbesondere soll es möglich sein, das Klebeband innerhalb einer Produktionsumgebung an einem zentralen Ort zu aktivieren und es dann zum Ort seiner Verwendung zu bringen, wofür zumindest ein Zeitfenster von zwei bis drei Stunden zur Verfügung stehen sollte.

Der Lösung der Aufgabe liegt der Gedanke zugrunde, Haftklebmassen durch den Releaseliner hindurch zu aktivieren. Ein erster und allgemeiner Gegenstand der Erfindung ist ein Verfahren zur Erhöhung der Klebkraft einer Haftklebmasseschicht, das

a) das zumindest einseitige Eindecken der Haftklebmasseschicht mit einem Releaseliner, wobei der Releaseliner derart plasmadurchlässig ist, dass bei vollständiger Auflage des Releaseliners auf der Haftklebmasseschicht 10 bis 90 % der Oberfläche der Haftklebmasseschicht einer Plasmabehandlung zugänglich sind; und

b) die Behandlung der mit dem Releaseliner bedeckten Haftklebmasseschicht mit einem Plasma

umfasst.

Wie sich gezeigt hat, lassen sich mit dem erfindungsgemäßen Verfahren Klebebandrollen durch Abwicklung im abgedeckten (mit dem Liner versehenen) Zustand aktivieren und anschließend wieder zu einer Rolle aufwickeln. Diese Rolle kann dann zum Ort der Verarbeitung gebracht und innerhalb von bis zu drei Stunden verarbeitet werden, ohne dass es zu wesentlichen Abschwächungserscheinungen hinsichtlich der Aktivierung kommt.

Daher kann das Plasmabehandlungsequipment stationär vorgehalten werden und steht für verschiedene Anwendungen - zumindest innerhalb derselben Produktionsumgebung - zur Verfügung. Auf diese Weise kann eine sehr effiziente Vorbehandlung von Klebebandrollen, Klebestreifen oder Stanzlingen realisiert werden, weil nicht das Equipment für die Plasmabehandlung zum jeweiligen Verwendungsort des Klebebandes geschafft werden muss, sondern die Klebebänder an einem zentralen Ort behandelt und anschließend zum

Ort ihrer Verwendung gebracht werden können. Dies wirkt sich insbesondere dann positiv aus, wenn verschiedene Klebebandrollen an verschiedenen Orten innerhalb kurzer Zeit zum Einsatz gelangen sollen, weil sich die gesamte Aktivierung stationär mit einer Anlage durchführen lässt.

Unter einem "Plasma" wird vorliegend ein Gas verstanden, in dem elektrische Entladungen hervorgerufen werden und dessen Eigenschaften durch die Aufspaltung einer Vielzahl seiner Moleküle in Ionen und Elektronen bestimmt sind. Die Behandlung der Haftklebmasseschicht findet bevorzugt mittels einer Düse statt. Dabei unterliegt das Plasma zunächst dem in der Düse erzeugten Staudruck, wird dann aber in einem Raum freigesetzt, der dem Atmosphärendruck unterliegt. Die mittlere Elektronengeschwindigkeit im Plasma ist dabei meist sehr hoch, wobei die mittlere kinetische Energie der Elektronen deutlich höher als die der Ionen ist. Mithin ist eine über diese Energie definierte Elektronentemperatur verschieden von der Temperatur der Ionen, und das Plasma ist nicht im thermischen Gleichgewicht; es ist "kalt".

Eine bekannte Methode zur Erzeugung eines Plasmas ist die Coronabehandlung. Die üblicherweise als "Corona" bezeichnete physikalische Vorbehandlungstechnik ist meist eine "dielektrische Barrierenentladung" (engl. dielectric barrier discharge, DBD). Siehe dazu auch Wagner et al., Vacuum, 71 (2003), 417-436. Dabei wird das zu behandelnde Substrat bahnförmig zwischen zwei Hochspannungselektroden durchgeführt, wobei mindestens eine Elektrode aus einem dielektrischen Material besteht oder damit beschichtet ist. Die Behandlungsintensität einer Coronabehandlung wird als "Dosis" in [Wmin/m$^2$] angegeben, mit der Dosis D=P/b*v, mit P=elektrischer Leistung [W], b=Elektrodenbreite [m], und v=Bahngeschwindigkeit [m/min].

Durch eine geeignet hohe Bahnspannung wird das Substrat auf die als Walze ausgeführte Gegenelektrode gepresst, um Lufteinschlüsse zu verhindern. Der Behandlungsabstand ist typischerweise ca. 1 bis 2 mm. Ein grundsätzlicher Nachteil einer solchen Zwei-ElektrodenGeometrie mit einer Behandlung im Raum zwischen Elektrode und Gegenelektrode ist die mögliche Rückseitenbehandlung. Bei kleinsten Luft- oder Gaseinschlüssen auf der Rückseite, beispielsweise wenn die Bahnspannung bei einer Rolle-zu-Rolle-Behandlung zu gering ist, findet eine meist ungewünschte Corona-Behandlung der Rückseite statt.

Bei der Behandlung mit der hochfrequenten Wechselspannung im kV-Bereich entstehen kurzzeitig diskrete Entladungskanäle zwischen Elektrode und Substrat, wobei auch beschleunigte Elektronen auf die Oberfläche des Substrats treffen. Beim Auftreffen der Elektronen kann die Energie das Zwei- bis Dreifache der Bindungsenergie der meisten molekularen Bindungen der üblicherweise behandelten Substrate (Kunststoffe, Haftklebmassen, Metalle, Glas) betragen und damit diese aufbrechen. Durch Sekundärreaktionen entstehen funktionelle und polare Gruppen in der Oberfläche. Die Entstehung von polaren Gruppen trägt beispielsweise stark zur Steigerung der Oberflächenenergie bei. Durch die Wirkung der energiereichen beschleunigten Elektronen ist eine solche Behandlung sehr effizient, bezogen auf die eingesetzte elektrische Energie, und sehr leistungsfähig, bezogen auf die möglichen ausgelösten Reaktionen. Die Erzeugung einer hohen Dichte von polaren und funktionellen Gruppen steht dabei allerdings im Wettbewerb mit dem Abbau von Material durch Kettenbrüche und Oxidation.

Die einfache Coronabehandlung bzw. DBD wird häufig zur Behandlung von unpolaren Oberflächen und Folien verwendet, damit deren Oberflächenenergie und Benetzbarkeit steigt. So werden Kunststofffolien vor dem Bedrucken oder dem Aufbringen von Klebemassen oft einer Coronabehandlung unterzogen.

Die Plasmabehandlung des erfindungsgemäßen Verfahrens wird jedoch bevorzugt als homogene und entladungsfreie Behandlung durchgeführt. Beispielsweise kann durch Einsatz von Edelgasen, teils mit Beimischungen, ein solches homogenes Plasma erzeugt werden. Dabei findet die Behandlung in einem homogen mit Plasma gefüllten Reaktionsraum statt.

Das Plasma enthält als reaktive Spezies Radikale und freie Elektronen, welche schnell mit vielen chemischen Gruppen in der Substratoberfläche reagieren können. Dies führt zur Entstehung von gasförmigen Reaktionsprodukten und hoch reaktiven, freien Radikalen in der Oberfläche. Diese freien Radikale können durch Sekundärreaktionen mit Sauerstoff oder anderen Gasen rasch weiterreagieren und bilden verschiedene chemische Funktionsgruppen auf der Substratoberfläche. Wie bei allen Plasmatechniken steht die Erzeugung von funktionellen Gruppen im Wettbewerb mit dem Materialabbau.

Das zu behandelnde Substrat kann statt dem Reaktionsraum einer Zwei-ElektrodenGeometrie auch nur dem entladungsfreien Plasma ausgesetzt werden ("indirektes" Plasma). Das Plasma ist dann meist auch in guter Näherung potentialfrei. Das Plasma wird dabei meist durch einen Gasstrom von der Entladungszone fortgetrieben und nach kurzer Strecke auf das Substrat geleitet, ohne dass eine Gegenelektrode benötigt wird. Die Lebenszeit (und damit auch die nutzbare Strecke) des reaktiven Plasmas, oft "afterglow" genannt, wird durch die genauen Details der Rekombinationsreaktionen und der Plasmachemie bestimmt. Meist wird ein exponentielles Abklingen der Reaktivität mit dem Abstand von der Entladungsquelle beobachtet.

Bevorzugt beruht die Plasmabehandlung des erfindungsgemäßen Verfahrens auf einem Düsenprinzip. Bevorzugt tritt daher das Plasma aus einer Düse aus, und diese Düse ist in einem Winkel von 45 bis 90 °, stärker bevorzugt von 60 bis 90 °, insbesondere von 75 bis 90 °, ganz besonders bevorzugt von 90 °, jeweils zur Lineroberfläche, richtungsorientiert. Hierbei kann die Düse rund oder linienförmig ausgeführt sein; teilweise wird mit Rotationsdüsen gearbeitet. Das Rotationsdüsenprinzip ist vorteilhaft aufgrund seiner Flexibilität und seiner inhärent einseitigen Behandlung. Solche Düsen, beispielsweise der Firma Plasmatreat, sind industriell weit verbreitet zur Vorbehandlung von Untergründen vor einer Verklebung. Nachteilig sind die indirekte und weniger effiziente, da entladungsfreie Behandlung, und dadurch die reduzierten Bahngeschwindigkeiten. Die übliche Bauform einer Runddüse ist jedoch besonders gut geeignet, um schmale Warenbahnen zu behandeln, beispielsweise ein Klebeband mit einer Breite von wenigen cm.

Es sind verschiedene Plasmaerzeuger auf dem Markt, die sich in der Technik zur Plasmaerzeugung, der Düsengeometrie und der Gasatmosphäre unterscheiden. Obwohl sich die Behandlungen unter anderem in der Effizienz unterscheiden, sind die grundsätzlichen Effekte meist ähnlich und vor allem durch die eingesetzte Gasatmosphäre bestimmt. Eine Plasma-Behandlung kann in verschiedenen Atmosphären stattfinden, wobei die Atmosphäre auch Luft umfassen kann. Die Behandlungsatmosphäre ist bevorzugt ausgewählt aus $N_2$, $O_2$, $H_2$, $CO_2$, Ar, He, Ammoniak sowie Gemischen aus zwei oder mehreren dieser Gase. Grundsätzlich umfasst die vorstehend beschriebene, bevorzugte Behandlungsatmosphäre optionale Beimischungen von Wasserdampf und/oder anderen Bestandteilen in untergeordneten Anteilen.

Grundsätzlich kann man der Behandlungsatmosphäre auch beschichtende oder polymerisierende Bestandteile beimischen, und zwar als Gas (zum Beispiel Ethylen) oder Flüssigkeit (vernebelt als Aerosol). Es ist fast keine Einschränkung der in Frage kommenden Aerosole gegeben. Besonders die indirekt arbeitenden Plasmatechniken sind für den Einsatz von Aerosolen geeignet, da hier keine Verschmutzung der Elektroden droht.

Da die Effekte einer Plasmabehandlung chemischer Natur sind und eine Veränderung der Oberflächenchemie im Vordergrund steht, kann man die hier beschriebenen Methoden auch als chemisch-physikalische Behandlungsmethoden bezeichnen.

Das erfindungsgemäße Verfahren umfasst eine Plasma-Behandlung einer mit einem Releaseliner bedeckten Haftklebmasseschicht.

Klebebänder, die ein- oder beidseitig mit Klebstoffen beschichtet sind, werden am Ende des Herstellungsprozesses zumeist zu einer Rolle oder einer Spule aufgewickelt. Um bei doppelseitig klebenden Klebebändern zu verhindern, dass die Haftklebmassen miteinander in Kontakt kommen, oder um bei einseitig klebenden Klebebändern ein leichteres Abrollen zu gewährleisten, wird die Klebmasse vor dem Wickeln des Klebebandes mit einem Abdeckmaterial (auch als Trennmaterial bezeichnet) bedeckt. Derartige Abdeckmaterialien sind unter den Namen "Releaseliner" oder "Liner" bekannt. Neben der Abdeckung von ein- oder doppelseitig klebenden Klebebändern werden Liner auch zur Eindeckung von Etiketten eingesetzt.

Diese Releaseliner sorgen des Weiteren dafür, dass die Klebemasse vor der Anwendung nicht verschmutzt wird. Zusätzlich können Releaseliner über die Art und Zusammensetzung der Releasematerialien so eingestellt werden, dass das Klebeband mit der gewünschten Kraft (leicht oder schwer) abgerollt werden kann. Bei beidseitig mit Klebmasse beschichteten Klebebändern sorgen die Releaseliner zusätzlich dafür, dass beim Abrollen die richtige Seite der Klebemasse zuerst freigelegt wird.

Ein Liner oder Releaseliner ist nicht Bestandteil eines Klebebandes oder Etiketts, sondern nur ein Hilfsmittel zu dessen Herstellung, Lagerung oder für die Weiterverarbeitung durch Stanzen. Darüber hinaus ist ein Liner im Gegensatz zu einem Klebebandträger nicht fest mit einer Klebstoffschicht verbunden.

Der Releaseliner des erfindungsgemäßen Verfahrens ist derart plasmadurchlässig, dass bei vollständiger Auflage des Releaseliners auf der Haftklebmasseschicht 10 bis 90 % der Oberfläche der Haftklebmasseschicht einer Plasmabehandlung zugänglich sind. Bevorzugt ist der Releaseliner derart plasmadurchlässig, dass bei vollständiger Auflage des Releaseliners auf der Haftklebmasseschicht 20 bis 80 %, insbesondere 40 bis 75 %, beispielsweise 60 bis 70 % der Oberfläche der Haftklebmasseschicht einer Plasmabehandlung zugänglich sind. Bevorzugt ist der Releaseliner derart plasmadurchlässig, dass bei vollständiger Auflage des Releaseliners auf der Haftklebmasseschicht mindestens 15 %, insbesondere mindestens 20 %, beispielsweise mindestens 25 % der Oberfläche der Haftklebmasseschicht einer Plasmabehandlung zugänglich sind.

Wie sich gezeigt hat, ermöglicht die Plasmadurchlässigkeit des Releaseliners eine vergleichsweise einfach, nämlich ohne Entfernen des Liners, zu erhaltende Klebkrafterhöhung der mit dem Liner bedeckten Haftklebmasseschicht. Zu Rollen gewickelte Klebebänder können somit nach Abwicklung im abgedeckten Zustand aktiviert und wieder zu einer Rolle gewickelt werden. Es hat sich herausgestellt, dass derart vorbehandelte Rollen bis zu 12 Stunden nach der Behandlung bei ähnlicher bzw. gleicher Klebleistung verarbeitet werden können. Gegenüber der üblichen, direkt vor der Applikation erfolgenden Aktivierung stellt dies einen enormen verarbeitungstechnischen Vorteil dar, der u.a. eine räumliche Trennung von Vorbehandlung und Verwendung der Klebebänder ermöglicht. Die Erfindung lässt sich auch auf Klebestreifen und Stanzlinge anwenden.

Um die Plasmadurchlässigkeit zu ermöglichen, ist der Releaseliner derart durchbrochen, dass sich be vollständiger Auflage des Releaseliners auf der Haftklebmasseschicht 10 bis 90 % der theoretisch mit dem Releaseliner bedeckbaren Oberfläche der Haftklebmasseschicht tatsächlich in direktem Kontakt mit dem Liner befinden. Die Dimensionen des Releaseliners sind dabei insbesondere derart, dass ohne die Durchbrechung der Releaseliner die gesamte Oberfläche der Haftklebmasseschicht abdecken würde.

Bevorzugt ist der Releaseliner derart durchbrochen, dass sich bei vollständiger Auflage des Releaseliners auf der Haftklebmasseschicht 20 bis 80 %, insbesondere 40 bis 75 %, beispielsweise 60 bis 70 % der theoretisch mit dem Releaseliner bedeckbaren Oberfläche der Haftklebmasseschicht tatsächlich in direktem Kontakt mit dem Liner befinden. Besonders bevorzugt ist der Releaseliner derart durchbrochen, dass sich bei vollständiger Auflage des Releaseliners auf der Haftklebmasseschicht maximal 85 %, insbesondere maximal 80 %, beispielsweise maximal 75 % und insbesondere maximal 70 % der theoretisch mit dem Releaseliner bedeckbaren Oberfläche der Haftklebmasseschicht tatsächlich in direktem Kontakt mit dem Liner befinden. "Durchbrochen" bedeutet insbesondere, dass der Releaseliner mehrere orthogonal zur Verklebungsebene durchgehend materialfreie Stellen aufweist, die in der parallel zur Verklebungsebene verlaufenden Ebene durch Linermaterial umgrenzt sind. Die absolute Größe der materialfreien, also offenen Stellen des Releaseliners des erfindungsgemäßen Verfahrens reicht - abhängig vom konkreten Einzelfall - vom Nanomaßstab über den Mikromaßstab bis zum mm-Maßstab. Bevorzugt beträgt der Durchmesser der offenen Stellen, definiert als größtmöglicher Abstand zweier auf der die jeweilige offene Stelle begrenzenden Linie liegenden Punkte, 0,5 $\mu$m bis 5 mm, stärker bevorzugt 0,6 $\mu$m bis 1 mm, insbesondere 0,7 $\mu$m bis 500 $\mu$m.

Die Plasmadurchlässigkeit des Releaseliners des erfindungsgemäßen Verfahrens kann durch die Verwendung textiler Flächengebilde als Releaseliner oder durch eine entsprechende Strukturierung herkömmlicher Releaseliner erreicht werden. Bevorzugt ist der Releaseliner eine perforierte Folie mit inhärenter Releasewirkung, eine silikonisierte Folie oder ein textiles Flächengebilde, besonders bevorzugt ein textiles Flächengebilde. Das textile Flächengebilde ist bevorzugt ein Gewebe oder ein Gewirke. Insbesondere ist der Releaseliner ein Gewebe oder Gewirke und besteht aus silikonisierten Kett- und Schussfäden.

Der Releaseliner kann auch ein so genanntes Abstandsgewebe oder -gewirke sein. Abstandsgewebe oder -gewirke sind mattenförmige Schichtkörper mit einer Deckschicht aus einem Faser- oder Filamentvlies, einer Unterlagsschicht und zwischen diesen Schichten vorhandenen einzelnen oder Büscheln von Haltefasern, die über die Fläche des Schichtkörpers verteilt durch die Partikelschicht hindurch genadelt sind und die Deckschicht und die Unterlagsschicht untereinander verbinden. Zusätzlich können in den Haltefasern Partikel aus inertem Gestein, wie zum Beispiel Sand, Kies oder dergleichen, vorhanden sein. Die durch die Partikelschicht hindurch genadelten Haltefasern halten die Deckschicht und die Unterlagsschicht in einem Abstand voneinander und sind mit der Deckschicht und der Unterlagsschicht verbunden.

Das Material des Releaseliners, d.h. insbesondere im Falle eines textilen Flächengebildes der zugrundeliegende Faden, kann selbst auch plasmadurchlässig sein, somit kann grundsätzlich auch durch dieses Material hindurch noch die Aktivierung der Klebmasse erfolgen.

Das Basismaterial des textilen Flächengebildes ist bevorzugt ausgewählt aus

- (Chemie)Fasern (Stapelfaser oder Endlosfilament) aus synthetischen Polymeren, auch synthetische Fasern genannt, insbesondere aus Polyester, Polyamid, Polyimid, Aramid, Polyolefin, Polyacrylnitril oder Glas;
- (Chemie)Fasern aus natürlichen Polymeren, besonders bevorzugt zellulosischen Fasern, insbesondere aus Viskose, Modal, Lyocell, Cupro, Acetat, Triacetat oder Cellulon; Gummifasern, Pflanzeneiweißfasern und Tiereiweißfasern; und
- natürlichen Fasern aus Baumwolle, Sisal, Flachs, Seide, Hanf, Leinen, Kokos oder Wolle sowie Gemischen aus zwei oder mehreren der vorstehend aufgeführten Materialien.

Die Gewebe oder Gelege können also auch aus einem Mischgarn hergestellt werden und somit sowohl synthetische als auch natürliche Bestandteile aufweisen. Bevorzugt sind die Kettfäden und die Schussfäden jedoch jeweils sortenrein ausgebildet, bestehen also jeweils entweder nur aus synthetischen Fäden oder nur aus Fäden aus natürlichen Rohstoffen.

Unter "Basismaterial" wird vorliegend das Material verstanden, das den Hauptbestandteil des textilen Flächengebildes bildet. Insbesondere wird darunter nicht ein gegebenenfalls vorhandener Silikonüberzug des textilen Materials verstanden, sondern vielmehr das textile Material selbst.

Die Maschenweite des textilen Flächengebildes beträgt bevorzugt 100 bis 1000 $\mu$m, bsonders bevorzugt 150 bis 800 $\mu$m, insbesondere 200 bis 700 $\mu$m. Es hat sich gezeigt, dass das Plasma über den Plasmastaudruck einer Düse in die Tiefe des textilen Flächengebildes eindringen kann und auf die freiliegenden Klebmassebereiche trifft; dies hat sich als ausreichend für eine signifikante Klebkrafterhöhung herausgestellt.

Bevorzugt umfasst der Releaseliner des erfindungsgemäßen Verfahrens eine Silikon-Releaseschicht, eine Carbamat-Releaseschicht oder eine Wachs-Releaseschicht, besonders bevorzugt eine Silikon-Releaseschicht. Insbesondere ist der Releaseliner ein textiles Flächengewebe, das zumindest zum Teil, bevorzugt vollständig, mit einer Silikon-Releaseschicht überzogen ist. Besonders bevorzugt ist der Releaseliner ein Gewebe oder Gewirke, das aus Kett- und Schussfäden besteht, wobei diese Kett- und Schussfäden zumindest zum Teil, bevorzugt vollständig, mit einer Silikon-Releaseschicht überzogen sind.

Die Silikon-Releaseschicht lässt sich bevorzugt auf ein vernetzbares Silikonsystem zurückführen. Zu diesen vernetzbaren Silikonsystemen zählen Mischungen aus Vernetzungskatalysatoren und so genannten thermisch härtbaren kondensations- oder additionsvernetzenden Polysiloxanen. Die Silikon-Releaseschicht kann auf lösungsmittelhaltige und/oder lösungsmittelfreie Systeme zurückgeführt werden, bevorzugt lässt sie sich auf ein lösungsmittelhaltiges System zurückführen.

Die Silikon-Releaseschicht lässt sich bevorzugt auf ein strahlungs- (UV- oder Elektronenstrahl-), kondensations- oder additionsvernetzendes System zurückführen, besonders bevorzugt auf ein additionsvernetzendes System.

Silikonbasierende Trennmittel auf additionsvernetzender Basis lassen sich in der Regel durch Hydrosilylierung härten. Die Formulierungen zum Herstellen dieser Trennmittel umfassen üblicherweise die folgenden Bestandteile:

ein Alkenylgruppen enthaltendes, lineares oder verzweigtes Polydiorganosiloxan,
ein Polyorganowasserstoffsiloxan-Vernetzungsmittel sowie
einen Hydrosilylierungskatalysator.

Als Katalysatoren für additionsvernetzende Silikonsysteme (Hydrosilylierungs-Katalysatoren) haben sich insbesondere Platin oder Platinverbindungen, wie zum Beispiel der Karstedt-Katalysator (eine Pt(0)-Komplexverbindung) bewährt.

Spezieller können derartige additionsvernetzende Trennbeschichtungen folgende Komponenten umfassen:

- ein lineares oder verzweigtes Dimethylpolysiloxan, welches aus ca. 80 bis 200 Dimethylpolysiloxan-Einheiten besteht und an den Kettenenden mit Vinyldimethylsiloxy-Einheiten abgestoppt ist. Typische Vertreter sind zum Beispiel lösungsmittelfreie, additionsvernetzende Silikonöle mit endständigen Vinylgruppen, wie Dehesive® 921 oder 610, beide kommerziell erhältlich bei der Wacker-Chemie GmbH;
- einen linearen oder verzweigten Vernetzer, welcher entweder nur Methylhydrogensiloxy-Einheiten in der Kette aufweist (Homopolymer-Vernetzer) oder aus Methylhydrogensiloxy- und Dimethylsiloxy-Einheiten zusammengesetzt ist (Copolymer-Vernetzer), wobei die Kettenenden entweder mit Trimethylsiloxy-Gruppen oder Dimethylhydrogensiloxy-Gruppen abgesättigt sind. Typische Vertreter dieser Produktklasse sind zum Beispiel Hydrogenpolysiloxane mit hohem Gehalt an reaktivem Si-H wie die Vernetzer V24, V90 oder V06, welche bei der Wacker-Chemie GmbH kommerziell erhältlich sind;
- ein Silikon-MQ-Harz, welches als M-Einheit neben den üblicherweise verwendeten Trimethylsiloxy-Einheiten auch über Vinyldimethylsiloxy-Einheiten verfügt. Typische Vertreter dieser Gruppe sind zum Beispiel die Trennkraftregler CRA® 17 oder CRA® 42, kommerziell erhältlich bei der Wacker-Chemie GmbH; und
- einen silikonlöslichen Platinkatalysator wie zum Beispiel einen Platindivinyltetramethyldisiloxan-Komplex, welcher üblicherweise als Karstedt-Komplex bezeichnet wird und beispielsweise unter der Bezeichnung Katalysator OL bei der Wacker-Chemie GmbH kommerziell erhältlich ist.

Silikonhaltige Systeme zur Herstellung von Trennbeschichtungen lassen sich, beispielsweise bei Dow Corning, Wacker oder Rohm&Haas, kommerziell erwerben.
Beispielhaft sei "Dehesive® 914" genannt, das ein Vinylpolydimethylsiloxan, den Vernetzer "Crosslinker V24", ein Methylhydrogenpolysiloxan und den Katalysator "Catalyst Ol", einen Platin-Katalysator in Polydimethylsiloxan, enthält. Dieses System ist bei der Wacker-Chemie GmbH erhältlich.
Verwendbar ist des Weiteren zum Beispiel das additionsvernetzende Silikon-Release-System "Dehesive® 940A" der Wacker-Chemie mit einem zugehörigen Katalysatorsystem.
Üblicherweise wird das Silikon-Release-System im unvernetzten Zustand aufgetragen und nachträglich vernetzt.
Von den genannten Silikonen haben die additionsvernetzenden Silikone die größte ökonomische Bedeutung. Eine unerwünschte Eigenschaft dieser Systeme ist allerdings ihre Empfindlichkeit gegenüber Katalysatorgiften, wie zum Beispiel Schwermetall-, Schwefel- und Stickstoffverbindungen (vgl. hierzu "Chemische Technik, Prozesse und Produkte" von R. Dittmeyer et al., Band 5, 5. Auflage, Wiley-VCH, Weinheim, Deutschland, 2005, Kapitel 6-5.3.2, Seite 1142). Allgemein gilt, dass Elektronendonatoren als Platingifte angesehen werden können (A. Colas, Silicone Chemistry Overview, Technical Paper, Dow Corning). Demnach sind auch Phosphorverbindungen wie Phosphine und Phosphite als Platingifte anzusehen. Die Präsenz von Katalysatorgiften führt dazu, dass die Vernetzungsreaktion zwischen den unterschiedlichen Bestandteilen eines Silikontrennmittels nicht mehr oder nur zu einem geringen Teil stattfindet. Daher wird bei der Herstellung von antiadhäsiven Silikonbeschichtungen die Anwesenheit von Katalysatorgiften, insbesondere von Platingiften, in der Regel streng vermieden.
Besondere Ausführungen der Silikonsysteme sind Polysiloxan-Blockcopolymere, zum Beispiel mit Harnstoff-Block, wie sie von der Firma Wacker unter dem Handelsnamen "Geniomer" angeboten werden, oder Trennsysteme aus Fluorsilikonen, die insbesondere bei Klebebändern mit Silikonklebmassen eingesetzt werden.
Weiterhin können auch photoaktive Katalysatoren, so genannte Photoinitiatoren, in Kombination mit UV-härtbaren, kationisch vernetzenden Siloxanen auf Epoxid- und/oder Vinyletherbasis beziehungsweise mit UV-härtbaren, radikalisch vernetzenden Siloxanen wie etwa acrylatmodifizierten Siloxanen verwendet werden. Ebenso ist die Verwendung von elektronenstrahlhärtbaren Silikonacrylaten möglich.
Auch photopolymerisierbare Organopolysiloxanmassen können verwendet werden. Genannt seien beispielsweise Massen, die durch die Reaktion zwischen Organopolysiloxanen, die mit (Meth)acrylatgruppen substituierte, direkt an Siliziumatome gebundene Kohlenwasserstoffreste aufweisen, in Gegenwart eines Photosensibilisators vernetzt werden (siehe z.B. EP 0 168 713 B1 oder DE 38 20 294 C1). Ebenfalls verwendbar sind Massen, bei denen die Vernetzungsreaktion zwischen Organopolysiloxanen, die mit Mercaptogruppen substituierte, direkt an Siliziumatome gebundene Kohlenwasserstoffreste aufweisen, und Organopolysiloxanen mit direkt an Siliziumatome gebundenen Vinylgruppen in Gegenwart eines Photosensibilisators erfolgt. Solche Massen werden beispielsweise in der US 4,725,630 beschrieben.

Beim Einsatz von zum Beispiel in der DE 33 16 166 C1 beschriebenen Organopolysiloxanmassen, die mit Epoxygruppen substituierte, direkt an Siliziumatome gebundene Kohlenwasserstoffreste aufweisen, wird die Vernetzungsreaktion durch Freisetzung einer katalytischen Säuremenge induziert, die durch Photozersetzung zugesetzter Oniumsalzkatalysatoren erhalten wird. Andere durch einen kationischen Mechanismus härtbare Organopolysiloxanmassen sind Materialien, welche zum Beispiel Propenyloxysiloxanendgruppen aufweisen.

Die Silikonsysteme können je nach Verwendungszweck auch weitere Zusätze, zum Beispiel Stabilisatoren oder Verlaufshilfsmittel, enthalten.

Die Natur der Haftklebmasseschicht ist prinzipiell unkritisch, solange die Haftklebmasse einer Plasmabehandlung grundsätzlich derart zugänglich ist, dass die Plasmabehandlung den Effekt einer Klebkrafterhöhung auslösen kann. Bevorzugt enthält die Haftklebemassenschicht mindestens ein Poly(meth)acrylat, Naturkautschuk, einen Synthesekautschuk oder ein Polyurethan oder Gemische aus zwei oder mehr der vorstehenden Materialien.

Die Haftklebmasseschicht - im Folgenden synonym auch einfach als "Haftklebmasse" bezeichnet - enthält bevorzugt Poly(meth)acrylat als Hauptbestandteil. Unter "Poly(meth)acrylat" wird ein Polymer verstanden, dessen Monomerbasis zu mindestens 70 Gew.-% aus Acrylsäure, Methacrylsäure, Acrylsäureestern und/oder Methacrylsäureestern besteht, wobei Acrylsäureester und/oder Methacrylsäureester zu mindestens 50 Gew.-% enthalten sind, jeweils bezogen auf die gesamte Monomerenzusammensetzung des betreffenden Polymers. Poly(meth)acrylate sind allgemein durch radikalische Polymerisation von Acryl- und/oder Methylacrylmonomeren sowie gegebenenfalls weiteren copolymerisierbaren Monomeren zugänglich. Der Begriff "Poly(meth)acrylat" umfasst erfindungsgemäß sowohl Polymere auf Basis von Acrylsäure und deren Derivaten als auch solche auf Basis von Acrylsäure und Methacrylsäure und deren Derivaten als auch solche auf Basis von Methacrylsäure und deren Derivaten. Die Haftklebmasseschicht kann ein oder mehrere Poly(meth)acrylat(e) enthalten. Sofern mehrere Poly(meth)acrylate enthalten sind, bezieht sich "Hauptbestandteil" auf die Gesamtheit der Poly(meth)acrylate.

Eine Poly(meth)acrylat-basierte Haftklebmasse weist vorteilhaft hohe Klebkräfte zu einer Reihe von Substraten auf und zeichnet sich ferner durch hohe Stabilität gegenüber Umwelteinflüssen sowie über lange Zeiträume aus.

Bevorzugt ist die Haftklebmasseschicht geschäumt. Unter einer "geschäumten Haftklebmasseschicht" - im Folgenden synonym auch einfach als "geschäumte Haftklebmasse" bezeichnet - wird eine Schicht einer Haftklebmasse verstanden, die ein haftklebriges Matrixmaterial und mehrere gasgefüllte Hohlräume umfasst, so dass die Dichte dieser Haftklebmasse im Vergleich zum bloßen Matrixmaterial ohne Hohlräume verringert ist. Die Schäumung des Matrixmaterials der geschäumten Haftklebmasse kann grundsätzlich auf jede beliebige Art und Weise bewirkt werden. Bevorzugt enthält die geschäumte Haftklebmasseschicht zumindest teilweise expandierte Mikrohohlkugeln. Darunter werden zumindest teilweise expandierte Mikrokugeln verstanden, die in ihrem Grundzustand elastisch und expandierbar sind und eine thermoplastische Polymerhülle aufweisen. Diese Kugeln sind - im Grundzustand - mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan gebräuchlich, die als verflüssigtes Gas unter Druck in der Polymerhülle eingeschlossen sind. Für derartige Mikrokugeln ist auch der Begriff "Mikroballons" gebräuchlich.

Durch Wärmeeinwirkung auf die Mikroballons erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, welche sich im Wesentlichen über ihre Größe (6 bis 45 μm Durchmesser im unexpandierten Zustand) und ihre zur Expansion benötigten Starttemperaturen (75 bis 220 °C) differenzieren. Unexpandierte Mikroballontypen sind auch als wässrige Dispersion mit einem Feststoffbeziehungsweise Mikroballonanteil von ca. 40 bis 45 Gew.-% erhältlich, weiterhin auch als polymergebundene Mikroballons (Masterbatche), zum Beispiel in Ethylenvinylacetat mit einer Mikroballonkonzentration von ca. 65 Gew.-%. Sowohl die Mikroballon-Dispersionen als auch die Masterbatche sind wie die unexpandierten Mikroballons als solche zur Herstellung der geschäumten Haftklebmasseschicht geeignet.

Die geschäumte Haftklebmasse kann auch mit sogenannten vorexpandierten Mikrohohlkugeln erzeugt werden. Bei dieser Gruppe findet die Expansion schon vor der Einmischung in die Polymermatrix statt.

Erfindungsgemäß bevorzugt enthält die geschäumte Haftklebmasseschicht unabhängig vom Herstellungsweg und von der eingesetzten Ausgangsform der Mikrohohlkugeln zumindest teilweise expandierte Mikrohohlkugeln. Besonders bevorzugt weisen mindestens 90 % aller von den Mikrohohlkugeln gebildeten Hohlräume der geschäumten Haftklebmasseschicht eine maximale Ausdehnung von 10 bis 500 μm, stärker bevorzugt von 15 bis 200 μm, auf.

Der Begriff "zumindest teilweise expandierte Mikrohohlkugeln" wird erfindungsgemäß so verstanden, dass die Mikrohohlkugeln zumindest soweit expandiert sind, dass damit eine Dichteverringerung der Haftklebmasse in einem technisch sinnvollen Ausmaß im Vergleich zu derselben Klebmasse mit den unexpandierten Mikrohohlkugeln bewirkt wird. Dies bedeutet, dass die Mikroballons nicht zwingend vollständig expandiert sein müssen. Bevorzugt sind die "mindestens teilweise expandierten Mikrohohlkugeln" jeweils auf mindestens das Doppelte ihrer maximalen Ausdehnung im unexpandierten Zustand expandiert.

Der Ausdruck "zumindest teilweise expandiert" bezieht sich auf den Expansionszustand der individuellen Mikrohohlkugeln und soll nicht ausdrücken, dass nur ein Teil der in Betracht kommenden Mikrohohlkugeln (an)expandiert sein muss. Wenn also "zumindest teilweise expandierte Mikrohohlkugeln" und unexpandierte Mikrohohlkugeln in der Klebmasse enthalten sind, dann bedeutet dies, dass unexpandierte (gar nicht expandierte, also auch nicht anexpandierte) Mikrohohlkugeln nicht zu den "zumindest teilweise expandierten Mikrohohlkugeln" gehören.

Bevorzugt ist die Haftklebmasseschicht geschäumt und enthält Poly(meth)acrylat als Hauptbestandteil. Das Poly(meth)acrylat der geschäumten Haftklebmasseschicht kann bevorzugt auf die folgende Monomerzusammensetzung zurückgeführt werden:

a) Acrylsäureester und/oder Methacrylsäureester der Formel (I)

$$CH_2 = C(R^I)(COOR^{II}) \qquad (I),$$

worin $R^I$ = H oder $CH_3$ und R'' ein Alkylrest mit 4 bis 14 C-Atomen, besonders bevorzugt mit 4 bis 9 C-Atomen, ist;
b) olefinisch ungesättigte Monomere mit funktionellen Gruppen, die eine Reaktivität mit Vernetzersubstanzen aufweisen;
c) optional weitere olefinisch ungesättigte Monomere, die mit den Monomeren (a) und (b) copolymerisierbar sind.

Die Anteile der Monomere a), b), und c) sind besonders bevorzugt derart gewählt, dass das Poly(meth)acrylat eine Glastemperatur von ≤ 15 °C (DMA bei geringen Frequenzen) aufweist. Dazu ist es vorteilhaft, die Monomere a) mit einem Anteil von 45 bis 99 Gew.-%, die Monomere b) mit einem Anteil von 1 bis 15 Gew.-% und die Monomere c) mit einem Anteil von 0 bis 40 Gew.-% zu wählen, jeweils bezogen auf die gesamte Monomerenzusammensetzung des Poly(meth)acrylats.

Die Monomere a) sind besonders bevorzugt weichmachende und/oder unpolare Monomere. Vorzugsweise sind die Monomere a) daher ausgewählt aus der Gruppe umfassend n-Butylacrylat, n-Butylmethacrylat, n-Pentylacrylat, n-Pentylmethacrylat, n-Amylacrylat, n-Hexylacrylat, n-Hexylmethacrylat, n-Heptylacrylat, n-Octylacrylat, n-Octylmethacrylat, n-Nonylacrylat, Isobutylacrylat, Isooctylacrylat, Isooctylmethacrylat, 2-Ethylhexylacrylat und 2-Ethylhexylmethacrylat.

Die Monomere b) sind bevorzugt olefinisch ungesättigte Monomere mit funktionellen Gruppen, die eine Reaktion mit Epoxidgruppen eingehen können. Besonders bevorzugt enthalten die Monomere b) jeweils mindestens eine funktionelle Gruppe ausgewählt aus der Gruppe bestehend aus Hydroxy-, Carboxy-, Sulfonsäure- und Phosphonsäuregruppen, Säureanhydridfunktionen, Epoxidgruppen und substituierten oder unsubstituierten Aminogruppen. Insbesondere sind die Monomere b) ausgewählt aus der Gruppe bestehend aus Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Maleinsäureanhydrid, 2-Hydroxyethylacrylat, 3-Hydroxypropylacrylat, 2-Hydroxyethylmethacrylat, 3-Hydroxypropylmethacrylat, 6-Hydroxyhexylmethacrylat, Allylalkohol, Glycidylacrylat und Glycidylmethacrylat.

Als Monomere c) kommen prinzipiell alle vinylisch funktionalisierten Verbindungen in Frage, die mit den Monomeren a) und den Monomeren b) copolymerisierbar sind. Mit Auswahl und Menge der Monomere c) lassen sich vorteilhaft Eigenschaften der geschäumten Haftklebmasse des Klebebandes (A) regulieren.

Die Monomere c) sind besonders bevorzugt ausgewählt aus der Gruppe bestehend aus Methylacrylat, Ethylacrylat, n-Propylacrylat, Methylmethacrylat, Ethylmethacrylat, Benzylacrylat, Benzylmethacrylat, sec.-Butylacrylat, tert-Butylacrylat, Phenylacrylat, Phenylmethacrylat, Isobornylacrylat, Isobornylmethacrylat, tert-Butylphenylacrylat, tert-Butylphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, 2-Butoxyethylmethacrylat, 2-Butoxyethylacrylat, 3,3,5-Trimethylcyclohexylacrylat, 3,5-Dimethyladamantylacrylat, 4-Cumyl-phenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofurfurylacrylat, Diethylaminoethylacrylat, Diethylaminoethylmethacrylat, Dimethylaminoethylacrylat, Dimethylaminoethylmethacrylat, , 3-Methoxyacrylsäuremethylester, 3-Methoxybutylacrylat, Phenoxyethylacrlylat, Phenoxyethylmethacrylat, 2-Phenoxyethylmethacrylat, Butyldiglykolmethacrylat, Ethylenglycolacrylat, Ethylenglycolmonomethylacrylat, Methoxy-Polyethylenglykolmethacrylat 350, Methoxy-Polyethylenglykolmethacrylat 500, Propylenglycolmonomethylacrylat, Butoxydiethylenglykolmethacrylat, Ethoxytriethylenglykolmethacrylat, Octafluoropentyl-acrylat, Octafluoropentylmethacrylat, 2,2,2-Trifluoroethylmethacrylat, 1,1,1,3,3,3-Hexa-fluoroisopropylacrylat, 1,1,1,3,3,3-Hexafluoroisopropylmethacrylat, 2,2,3,3,3-Pentafluoro-propylmethacrylat, 2,2,3,4,4,4-Hexafluorobutylmethacrylat, 2,2,3,3,4,4,4-Heptafluoro-butylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropylmethacrylamid, N-(1-Methyl-undecyl)acrylamid, N-(n-Butoxymethyl)acrylamid, N-(Butoxymethyl)methacrylamid, N-(Ethoxymethyl)acrylamid, N-(n-Octadecyl)acrylamid,

N,N-Dialkyl-substituierten Amiden, insbesondere N,N-Dimethylacrylamid, N,N-Dimethylmethacrylamid, N-Benzylacrylamid, N-Isopropylacrylamid, N-tert-Butylacrylamid, N-tert-Octylacrylamid, N-Methylolacrylamid, N-Methylolmethacrylamid; weiter Acrylnitril, Methacrylnitril; Vinylethern wie Vinylmethylether, Ethylvinylether, Vinylisobutylether; Vinylestern wie Vinylacetat; Vinylchlorid, Vinylhalogeniden, Vinylidenhalogeniden, Vinylpyridin, 4-Vinylpyridin, N-Vinylphthalimid, N-Vinyllactam, N-Vinylpyrrolidon, Styrol, α- und p-Methylstyrol, α-Butylstyrol, 4-n-Butylstyrol, 4-n-Decylstyrol, 3,4-Dimethoxystyrol, 2-Polystyrolethylmethacrylat (Molekulargewicht Mw von 4000 bis 13000 g/mol) und Poly(Methylmethacrylat)ethylmethacrylat (Mw von 2000 bis 8000 g/mol).

Die Monomere c) können vorteilhaft auch derart gewählt werden, dass sie funktionelle Gruppen enthalten, die eine strahlenchemische Vernetzung (beispielsweise durch Elektronenstrahlen oder UV) unterstützen. Geeignete copolymerisierbare Photoinitiatoren sind z.B. Benzoinacrylat und acrylatfunktionalisierte Benzophenonderivate. Monomere, die eine Vernetzung durch Elektronenbestrahlung unterstützen, sind z.B. Tetrahydrofurfurylacrylat, N-tert-Butylacrylamid und Allylacrylat.

Besonders bevorzugt sind, sofern die geschäumte Haftklebmasseschicht mehrere Poly(meth)acrylate enthält, alle Poly(meth)acrylate der geschäumten Haftklebmasseschicht auf die vorstehend beschriebene Monomerenzusammensetzung zurückzuführen. Insbesondere sind alle Poly(meth)acrylate der geschäumten Haftklebmasse auf eine Monomerenzusammensetzung bestehend aus Acrylsäure, n-Butylacrylat und Methylacrylat zurückzuführen.

Insbesondere ist das Poly(meth)acrylat bzw. sind alle Poly(meth)acrylate der geschäumten Haftklebmasseschicht auf die folgende Monomerenzusammensetzung zurückzuführen:

| | |
|---|---|
| Acrylsäure | 3 - 15 Gew.-% |
| Methylacrylat | 10 - 35 Gew.-% |
| 2-Ethylhexylacrylat | 50 - 87 Gew.-%, |

wobei sich die Anteile der Monomeren zu 100 Gew.-% addieren.

In einer Ausführungsform der Erfindung enthält die Haftklebmasseschicht Poly(meth)acrylat als Hauptbestandteil, und das Poly(meth)acrylat kann auf die folgende Monomerenzusammensetzung zurückgeführt werden:

80 bis 95 Gew.-% 2-Ethylhexylacrylat und/oder n-Butylacrylat,

5 bis 20 Gew.-% Acrylsäure.

Diese Haftklebmasseschicht ist bevorzugt nicht geschäumt.

Die Poly(meth)acrylate der Haftklebmasseschicht können durch radikalische Polymerisation der Monomere in Lösungsmitteln, insbesondere in Lösungsmitteln mit einem Siedebereich von 50 bis 150 °C, vorzugsweise von 60 bis 120 °C, unter Verwendung der üblichen Mengen an Polymerisationsinitiatoren, die im allgemeinen bei 0,01 bis 5, insbesondere bei 0,1 bis 2 Gew.-% (bezogen auf das Gesamtgewicht der Monomeren) liegen, hergestellt werden.

Prinzipiell eignen sich alle dem Fachmann geläufigen, üblichen Initiatoren. Beispiele für Radikalquellen sind Peroxide, Hydroperoxide und Azoverbindungen, zum Beispiel Dibenzoylperoxid, Cumolhydroperoxid, Cyclohexanonperoxid, Di-t-butylperoxid, Cyclohexylsulfonylacetylperoxid, Diisopropylpercarbonat, t-Butylperoktoat, Benzpinacol. In einer sehr bevorzugten Vorgehensweise wird als radikalischer Initiator 2,2'-Azobis(2-methylbutyronitril) oder 2,2'-Azo-bis(2-methylpropionitril) (2,2'-Azobisisobutyronitril; AIBN) verwendet.

Als Lösungsmittel für die Herstellung der Poly(meth)acrylate kommen Alkohole wie Methanol, Ethanol, n-und iso-Propanol, n-und iso-Butanol, vorzugsweise Isopropanol und/oder Isobutanol, sowie Kohlenwasserstoffe wie Toluol und insbesondere Benzine eines Siedebereichs von 60 bis 120 °C in Frage. Ferner können Ketone wie vorzugsweise Aceton, Methylethylketon, Methylisobutylketon und Ester wie Essigsäureethylester sowie Gemische von Lösungsmitteln der genannten Art eingesetzt werden, wobei Gemische, die Isopropanol, insbesondere in Mengen von 2 bis 15 Gew.-%, bevorzugt 3 bis 10 Gew.-%, bezogen auf das eingesetzte Lösungsmittelgemisch, enthalten, vorgezogen werden.

Erfindungsgemäß bevorzugt erfolgt nach der Herstellung (Polymerisation) der Poly(meth)acrylate eine Aufkonzentration, und die weitere Verarbeitung der Poly(meth)acrylate erfolgt im Wesentlichen lösemittelfrei. Die Aufkonzentration des Polymerisats kann in Abwesenheit von Vernetzer- und Beschleunigersubstanzen geschehen. Es ist aber auch möglich, eine dieser Substanzklassen dem Polymerisat bereits vor der Aufkonzentration zuzusetzen, so dass die Aufkonzentration dann in Gegenwart dieser Substanz(en) erfolgt.

Die Polymerisate können nach dem Aufkonzentrationsschritt in einen Compounder überführt werden. Gegebenenfalls können die Aufkonzentration und die Compoundierung auch im selben Reaktor stattfinden.

Die gewichtsmittleren Molekulargewichte Mw der Poly(meth)acrylate der Haftklebmasseschicht liegen bevorzugt in einem Bereich von 20.000 bis 2.000.000 g/mol, sehr bevorzugt in einem Bereich von 100.000 bis 1.500.000 g/mol, äußerst bevorzugt in einem Bereich von 150.000 bis 1.000.000 g/mol. Die Angaben des mittleren Molekulargewichtes Mw und der Polydispersität PD in dieser Schrift beziehen sich auf die Bestimmung per Gelpermeationschromatographie. Es kann vorteilhaft sein, die Polymerisation in Gegenwart geeigneter Polymerisationsregler wie Thiole, Halogenverbindungen und/oder Alkohole durchzuführen, um das gewünschte mittlere Molekulargewicht einzustellen.

Das Poly(meth)acrylat hat vorzugsweise einen K-Wert von 30 bis 90, besonders bevorzugt von 40 bis 70, gemessen in Toluol (1%ige Lösung, 21 °C). Der K-Wert nach Fikentscher ist ein Maß für das Molekulargewicht und die Viskosität des Poly(meth)acrylats.

Erfindungsgemäß ebenfalls geeignet sind Poly(meth)acrylate, die eine enge Molekulargewichtsverteilung (Polydispersität PD < 4) haben. Diese Polymere haben trotz eines relativ niedrigen Molekulargewichts nach dem Vernetzen eine besonders gute Scherfestigkeit. Zudem ermöglicht die niedrigere Polydispersität eine leichtere Verarbeitung aus der Schmelze, da die Fließviskosität gegenüber einem breiter verteilten Poly(meth)acrylat bei weitgehend gleichen Anwendungseigenschaften geringer ist. Eng verteilte Poly(meth)acrylate können vorteilhaft durch anionische Polymerisation oder durch kontrollierte radikalische Polymerisationsmethoden hergestellt werden, wobei letztere besonders gut geeignet sind. Auch über N-Oxyle lassen sich entsprechende Poly(meth)acrylate herstellen. Daneben lässt sich die Atom Transfer Radical Polymerization (ATRP) in vorteilhafter Weise zur Synthese eng verteilter Polyacrylate einsetzen, wobei als Initiator bevorzugt monofunktionelle oder difunktionelle sekundäre oder tertiäre Halogenide und zur Abstraktion der Halogenide Cu-, Ni-, Fe-, Pd-, Pt-, Ru-, Os-, Rh-, Co-, Ir-, Ag- oder Au-Komplexe eingesetzt werden.

Das bzw. die Poly(meth)acrylat(e) der Haftklebmasseschicht ist/sind bevorzugt vernetzt, besonders bevorzugt thermisch vernetzt.

Bevorzugt sind die Poly(meth)acrylate der Haftklebmasseschicht mit Isocyanaten, insbesondere mit trimerisierten Isocyanaten und/oder blockierungsmittelfreien und sterisch gehinderten Isocyanaten, und/oder Epoxidverbindungen vernetzt, jeweils bei Anwesenheit funktioneller Gruppen in den Polymer-Makromolekülen, die mit Isocyanatgruppen bzw. Epoxidgruppen reagieren können.

Um die Reaktivität der Isocyanate abzuschwächen, können vorteilhaft mit thermisch abspaltbaren funktionellen Gruppen blockierte Isocyanate eingesetzt werden. Zur Blockierung werden bevorzugt aliphatische primäre und sekundäre Alkohole, Phenolderivate, aliphatische primäre und sekundäre Amine, Lactame, Lactone und Malonsäureester verwendet.

Werden Epoxid-Amin-Systeme als Vernetzersysteme eingesetzt, können die Amine in ihre Salze überführt werden, um eine Erhöhung der Topfzeit zu gewährleisten. Dabei werden leicht flüchtige organische Säuren (z.B. Ameisensäure, Essigsäure) oder leicht flüchtige Mineralsäuren (z.B. Salzsäure, Derivate der Kohlensäure) zur Salzbildung bevorzugt.

Als besonders bevorzugt - insbesondere für geschäumte Haftklebmasseschichten - hat sich ein Vernetzer-Beschleuniger-System herausgestellt, das zumindest eine epoxidgruppenhaltige Substanz als Vernetzer und zumindest eine bei einer Temperatur unterhalb der Schmelztemperatur des Poly(meth)acrylats für die Verknüpfungsreaktion beschleunigend wirkende Substanz als Beschleuniger umfasst. Das System setzt einen Gehalt der Polymere an funktionellen Gruppen voraus, die mit Epoxidgruppen Vernetzungsreaktionen eingehen können. Als epoxidgruppenhaltige Substanzen eignen sich multifunktionelle Epoxide, insbesondere bifunktionelle oder trifunktionelle (also solche Epoxide mit zwei bzw. drei Epoxidgruppen), aber auch höherfunktionelle Epoxide oder Mischungen unterschiedlich funktioneller Epoxide. Als Beschleuniger können bevorzugt Amine (formell als Substitutionsprodukte des Ammoniaks aufzufassen), beispielsweise primäre und/oder sekundäre Amine; insbesondere tertiäre und/oder multifunktionelle Amine eingesetzt werden. Einsetzbar sind auch Substanzen, die mehrere Amingruppen aufweisen, wobei diese Amingruppen primäre und/oder sekundäre und/oder tertiäre Amingruppen sein können, insbesondere Diamine, Triamine und/oder Tetramine. Insbesondere werden solche Amine gewählt, die mit den Polymerbausteinen keine oder nur geringfügige Reaktionen eingehen. Als Beschleuniger können weiterhin beispielsweise solche auf Phosphorbasis, wie Phosphine und/oder Phosphoniumverbindungen, eingesetzt werden.

Als funktionelle Gruppen des zu vernetzenden Poly(meth)acrylats eignen sich besonders Säuregruppen (beispielsweise Carbonsäure-, Sulfonsäure- und/oder Phosphonsäuregruppen) und/oder Hydroxygruppen und/oder Säureanhydridgruppen und/oder Epoxidgruppen und/oder Amingruppen. Es ist besonders vorteilhaft, wenn das Polymer einpolymerisierte Acrylsäure und/oder Methacrylsäure enthält.

Es kann jedoch auch vorteilhaft sein, auf Beschleuniger zu verzichten, da diese zum Beispiel zum Vergilben neigen können (insbesondere stickstoffhaltige Substanzen). Als Vernetzer, die ohne Beschleunigerzusatz auskommen, eignen sich beispielsweise Epoxycyclohexylderivate, insbesondere bei Anwesenheit von Carbonsäuregruppen im zu vernetzenden Poly(meth)acrylat. Dies kann zum Beispiel durch mindestens 5 Gew.-% einpolymerisierte Acrylsäure in das Polymer realisiert sein. In dem zu vernetzenden Polymer sind vorteilhaft insbesondere keine Protonenakzeptoren, keine Elektronenpaar-Donatoren (Lewisbasen) und/oder keine Elektronenpaarakzeptoren (Lewissäuren) zugegen. Die Abwesenheit dieser Substanzen bezieht sich dabei insbesondere auf extern zugesetzte, also nicht einpolymerisierte bzw. in das Polymergerüst eingebaute Beschleuniger; besonders bevorzugt sind aber weder extern zugesetzte noch einpolymerisierte, insbesondere gar keine Beschleuniger zugegen. Als besonders vorteilhafte Vernetzer haben sich Epoxycyclohexylcarboxylate wie (3,4-Epoxycyclohexan)methyl-3,4-epoxycyclohexylcarboxylat herausgestellt.

In einer Ausführungsform der Erfindung enthält die Haftklebmasseschicht, insbesondere die geschäumte Haftklebmasseschicht, neben dem bzw. den Poly(meth)acrylat(en) mindestens ein weiteres Polymer. Das weitere Polymer ist bevorzugt ausgewählt aus der Gruppe bestehend aus Acrylat-unlöslichen Polymeren wie Polyolefinen (z.B. LDPE, HDPE, Polypropylen), Polyolefin-Copolymeren (z.B. Ethylen-Propylen-Copolymere), Polyestern, Copolyestern, Polyamiden, Copolyamiden, fluorierten Polymeren, Polyalkylenoxiden, Polyvinylalkohol, Ionomeren (bspw. mit Base neutralisierte Ethylen-Methacrylsäure-Copolymere), Celluloseacetat, Polyacrylnitril, Polyvinylchlorid, thermoplastischen Polyurethanen, Polycarbonaten, ABS-Copolymeren sowie Polymeren, die inhärent haftklebrig sind oder durch den Zusatz von Klebkraftverstärkern haftklebrig gemacht werden können, insbesondere Poly-$\alpha$-Olefinen, speziellen Blockcopolymeren (Diblock-, Triblock-, sternförmige Blockcopolymere und Kombinationen davon), Natur- und Synthesekautschuken, Silikonen und Ethylenvinylacetat.

In einer spezielleren Ausführungsform enthält die Haftklebmasseschicht, insbesondere die geschäumte Haftklebmasseschicht, 15 bis 50 Gew.-% mindestens eines Synthesekautschuks. Bevorzugt ist Synthesekautschuk zu 20 bis 40 Gew.-%, jeweils bezogen auf das Gesamtgewicht der Haftklebmasse, enthalten.

Bevorzugt ist in dieser Ausführungsform mindestens ein Synthesekautschuk der Haftklebmasseschicht ein Blockcopolymer mit einem Aufbau A-B, A-B-A, (A-B)n, (A-B)nX oder (A-B-A)nX,

worin

- die Blöcke A unabhängig voneinander für ein Polymer, gebildet durch Polymerisation mindestens eines Vinylaromaten;
- die Blöcke B unabhängig voneinander für ein Polymer, gebildet durch Polymerisation von konjugierten Dienen mit 4 bis 18 C-Atomen und/oder Isobutylen, oder für ein teil- oder vollhydriertes Derivat eines solchen Polymers;
- X für den Rest eines Kopplungsreagenzes oder Initiators und
- n für eine ganze Zahl $\geq$ 2 stehen.

Insbesondere sind in dieser Ausführungsform alle Synthesekautschuke der Haftklebmasseschicht Blockcopolymere mit einem Aufbau wie vorstehend dargelegt. Die Haftklebmasseschicht kann somit auch Gemische verschiedener Blockcopolymere mit einem Aufbau wie vorstehend enthalten.

Geeignete Blockcopolymere (Vinylaromatenblockcopolymere) umfassen also vorzugsweise einen oder mehrere gummiartige Blöcke B (Weichblöcke) und einen oder mehrere glasartige Blöcke A (Hartblöcke). Besonders bevorzugt ist mindestens ein Synthesekautschuk der Haftklebmasseschicht ein Blockcopolymer mit einem Aufbau A-B, A-B-A, (A-B)$_3$X oder (A-B)$_4$X, wobei für A, B und X die vorstehenden Bedeutungen gelten. Ganz besonders bevorzugt sind alle Synthesekautschuke der Haftklebmasseschicht Blockcopolymere mit einem Aufbau A-B, A-B-A, (A-B)$_3$X oder (A-B)$_4$X, wobei für A, B und X die vorstehenden Bedeutungen gelten. Insbesondere ist der Synthesekautschuk der Haftklebmasseschicht ein Gemisch aus Blockcopolymeren mit einem Aufbau A-B, A-B-A, (A-B)$_3$X oder (A-B)$_4$X, das bevorzugt mindestens Diblockcopolymere A-B und/oder Triblockcopolymere A-B-A enthält.

Der Block A ist generell ein glasartiger Block mit einer bevorzugten Glasübergangstemperatur (Tg, DSC), die oberhalb der Raumtemperatur liegt. Besonders bevorzugt liegt die Tg des glasartigen Blockes bei mindestens 40 °C, insbesondere bei mindestens 60 °C, ganz besonders bevorzugt bei mindestens 80 °C und äußerst bevorzugt bei mindestens 100 °C. Der Anteil an Vinylaromatenblöcken A an den gesamten Blockcopolymeren beträgt bevorzugt 10 bis 40 Gew.-%, besonders bevorzugt 20 bis 33 Gew.-%. Vinylaromaten zum Aufbau des Blocks A umfassen bevorzugt Styrol, $\alpha$-Methylstyrol und/oder andere Styrol-Derivate. Der Block A kann somit als Homo- oder Copolymer vorliegen. Besonders bevorzugt ist der Block A ein Polystyrol.

Das Vinylaromatenblockcopolymer weist weiter einen gummiartigen Block B bzw. Weichblock mit einer bevorzugten Tg von kleiner als Raumtemperatur auf. Die Tg des Weichblocks ist besonders bevorzugt kleiner als 0 °C, insbesondere kleiner als -10 °C, beispielsweise kleiner als -40 °C und ganz besonders bevorzugt kleiner als -60 °C.

Bevorzugte konjugierte Diene als Monomere für den Weichblock B sind insbesondere ausgewählt aus der Gruppe bestehend aus Butadien, Isopren, Ethylbutadien, Phenylbutadien, Piperylen, Pentadien, Hexadien, Ethylhexadien, Dimethylbutadien und den Farnesen-Isomeren sowie beliebigen Mischungen dieser Monomere. Auch der Block B kann als Homopolymer oder als Copolymer vorliegen. Besonders bevorzugt sind die konjugierten Diene als Monomere für den Weichblock B ausgewählt aus Butadien und Isopren. Beispielsweise ist der Weichblock B ein Polyisopren, ein Polybutadien oder ein teil- oder vollhydriertes Derivat eines dieser beiden Polymere wie insbesondere Polybutylenbutadien; oder ein Polymer aus einem Gemisch aus Butadien und Isopren. Ganz besonders bevorzugt ist der Block B ein Polybutadien.

Die Haftklebmasseschicht kann Additive enthalten, um bestimmte Eigenschaften hervorzurufen oder diese stärker auszuprägen.

In einer Ausführungsform enthält die Haftklebemasseschicht mindestens ein Harz. Dabei handelt es sich bevorzugt um ein Klebharz. Als Harze im Sinne der Erfindung werden oligo- und polymere Verbindungen mit einem zahlenmittleren Molekulargewicht Mn von nicht mehr als 5.000 g/mol angesehen. Der maximale Harzanteil wird dabei durch die Mischbarkeit mit den - gegebenenfalls mit weiteren Stoffen abgemischten - höhermolekularen Polymeren begrenzt; es sollte sich jedenfalls zwischen Harz und Polymeren eine homogene Mischung ausbilden.

Die klebrig machenden Harze (Klebharze) sind bevorzugt ausgewählt aus der Gruppe bestehend aus Pinen-, Inden- und Kolophoniumharzen und deren disproportionierten, hydrierten, polymerisierten und/oder veresterten Derivaten und Salzen, aliphatischen und aromatischen Kohlenwasserstoffharzen, Terpenharzen und Terpenphenolharzen sowie C5-, C9- und anderen Kohlenwasserstoffharzen, jeweils für sich oder in Kombination miteinander. Bevorzugte Terpenphenolharze sind beispielsweise Dertophene T105 und Dertophene T110, ein bevorzugtes hydriertes Kolophoniumderivat ist Foral 85.

Die Haftklebemasseschicht kann Alterungsschutzmittel enthalten. Bevorzugt enthält die erfindungsgemäße Haftklebemasse in der oben beschriebenen Ausführungsform, in der sie mindestens einen Synthesekautschuk enthält, mindestens ein Alterungsschutzmittel.

Die Haftklebemasseschicht kann Flammschutzmittel enthalten. Bevorzugte Flammschutzmittel sind hochmolekulare Phosphatester, beispielsweise Reofos® RDP (CAS-Nr. 57583-54-7).

Die Haftklebmasseschicht kann Füllstoffe (verstärkend oder nicht verstärkend) wie Siliciumdioxide (sphärisch, nadelförmig, plättchenförmig oder unregelmäßig wie die pyrogenen Silicas), Glas als Voll- oder Hohlkugeln, Kalziumcarbonate, Zinkoxide, Titandioxide, Aluminiumoxide und/oder Aluminiumoxidhydroxide enthalten. Füllstoffe können sowohl der Justierung der Verarbeitbarkeit als auch der klebtechnischen Eigenschaften dienen. Geeignete Konzentrationen liegen im Bereich von 0,1 bis zu 20 Gewichtsteilen bezogen auf die Feststoffe der Haftklebmasseschicht.

Die geschäumte Haftklebmasseschicht kann die Haftklebmasseschicht eines Klebebandes sein. Dies ist vorteilhaft, weil die geschäumte Haftklebmasse in der Lage ist, Unebenheiten auf der Substratoberfläche zu kompensieren und somit auch auf derartigen Oberflächen gleichmäßige Verklebungen zu realisieren. Alternativ kann die geschäumte Haftklebmasseschicht ein Trägermaterial sein, auf dessen mindestens einer Seite eine ungeschäumte Haftklebmasseschicht angeordnet ist, welche dann die Haftklebmasseschicht im Sinne der vorliegenden Erfindung ist. Dies ist vorteilhaft, weil sich positive Eigenschaften des geschäumten Trägermaterials mit solchen der Haftklebmasse kombinieren lassen und auf diese Weise sehr leistungsstarke Klebschichten erhalten werden können.

Beispiele

Die nachfolgend beschriebenen Untersuchungen wurden an einschichtigen Polyacrylatschaum-Klebebändern tesa® ACX$^{plus}$ 7812 vorgenommen. Die Klebebänder wurden einseitig einer Plasmabehandlung mittels einer Laboranlage FG5001 der Firma Plasmatreat mit einer Rotationsdüse RD1004 bei Verwendung von Druckluft unterzogen, und zwar:

- in den Vergleichsversuchen direkt auf der Klebmasse, direkt auf dem Untergrund, sowohl auf der Klebmasse als auch auf dem Untergrund und einmal gar nicht;
- in den erfindungsgemäßen Versuchen durch ein silikonisiertes Gewirke hindurch auf die Klebmasse. Bei dem silikonisierten Gewirke handelte es sich um ein im Tauchbad silikonisiertes PET-Garn mit durchschnittlichen Maschenabmessungen von 605 x 276 μm. Die durchschnittlichen Stegbreiten des PET-Garns betrugen 357 x 153 μm.

Weitere Angaben finden sich in der nachfolgenden Tabelle 1. Darin bedeuten:

| | |
|---|---|
| v | die Verfahrgeschwindigkeit der Düseneinheit über das zu behandelnde Substrat |
| d Subs | Abstand zwischen Plasmadüse und Substrat |
| Vgl. | Vergleichsversuch |
| A | adhäsiver Bruch (an der Grenzfläche zwischen Klebmasse und Substrat) |
| K | kohäsiver Bruch (innerhalb der Verklebung) |

Nach Ablauf von 3 h nach der Plasmabehandlung wurden Klebkraftmessungen gemäß dem nachfolgend dargestellten Verfahren durchgeführt.

Messung Klebkraft 90 °:

Die Klebebandmuster wurden auf 20 mm Breite zugeschnitten und auf einem Clearcoat Apo 1.2 PPG (Autolack) verklebt. Es wurde eine Aufziehzeit von 24 h abgewartet.

Die verklebten Muster wurden dann in eine spezielle Halterung geschoben, die es ermöglicht, das Muster in einem Winkel von 90 ° senkrecht nach oben abzuziehen. Die Abzugsgeschwindigkeit betrug 300 mm/min. Die Klebkraftmessung erfolgte mit einer Zwick-Zugprüfmaschine.

Die Messergebnisse sind in Tabelle 1 in N/cm angegeben und sind gemittelt aus drei Messungen. Der Releaseliner ließ sich jeweils mit üblichem Kraftaufwand von der Klebmasse entfernen.

Tabelle 1: Plasmabehandlung tesa® ACX<sup>plus</sup> 7812

| Nr. | Plasma Masse | | Plasma Untergrund | | Klebkraft |
|---|---|---|---|---|---|
| | v (m/min) | d Subs (mm) | v (m/min) | d Subs (mm) | |
| 1 (Vgl.) | - | - | - | - | 16,83 |
| 2 (Vgl.) | 5 | 12 | - | - | 66,50 |
| 3 (Vgl.) | - | - | 5 | 12 | 45,12 |
| 4 (Vgl.) | 5 | 12 | 5 | 12 | 62,49 |
| 5 | 5 | 8 | - | - | 52,27 |
| 6 | 5 | 12 | - | - | 67,09 |
| 7 | 5 | 16 | - | - | 44,71 |

**Patentansprüche**

1. Verfahren zur Erhöhung der Klebkraft einer Haftklebmasseschicht, umfassend

   a) das zumindest einseitige Eindecken der Haftklebmasseschicht mit einem Releaseliner, wobei der Releaseliner derart durchbrochen und dadurch plasmadurchlässig ist, dass bei vollständiger Auflage des Releaseliners auf der Haftklebmasseschicht 10 bis 90 % der Oberfläche der Haftklebmasseschicht einer Plasmabehandlung zugänglich sind;
   b) die Behandlung der mit dem Releaseliner bedeckten Haftklebmasseschicht mit einem Plasma.

2. Verfahren gemäß Anspruch 1, **dadurch gekennzeichnet, dass** der Releaseliner ein textiles Flächengebilde ist.

3. Verfahren gemäß Anspruch 2, **dadurch gekennzeichnet, dass** das textile Flächengebilde ein Gewebe oder ein Gewirke ist.

4. Verfahren gemäß Anspruch 3, **dadurch gekennzeichnet, dass** der Releaseliner aus silikonisierten Kett- und Schussfäden besteht.

5. Verfahren gemäß einem der vorstehenden Ansprüche, **dadurch gekennzeichnet, dass** die Haftklebmasseschicht Poly(meth)acrylat als Hauptbestandteil enthält.

6. Verfahren gemäß einem der vorstehenden Ansprüche, **dadurch gekennzeichnet, dass** die Haftklebmasseschicht geschäumt ist.

7. Verfahren gemäß einem der vorstehenden Ansprüche, **dadurch gekennzeichnet, dass** das Plasma aus einer Düse austritt und diese Düse in einem Winkel von 45 bis 90 ° zur Lineroberfläche richtungsorientiert ist.

**Claims**

1. Method for increasing the peel adhesion of a layer of pressure-sensitive adhesive, comprising

   a) the at least single-sided covering of the layer of pressure-sensitive adhesive with a release liner, the perforation and resultant plasma permeability of the release liner being such that, with the release liner laid completely on the layer of pressure-sensitive adhesive, 10 to 90% of the surface of the layer of pressure-sensitive adhesive is amenable to a plasma treatment;
b) the treatment, with a plasma, of the release liner-covered layer of pressure-sensitive adhesive.

2. Method according to Claim 1, **characterized in that** the release liner is a sheetlike textile structure.

3. Method according to Claim 2, **characterized in that** the sheetlike textile structure is a woven or a knitted fabric.

4. Method according to Claim 3, **characterized in that** the release liner consists of siliconized warp and weft threads.

5. Method according to any of the preceding claims, **characterized in that** the layer of pressure-sensitive adhesive comprises poly(meth)acrylate as principal constituent.

6. Method according to any of the preceding claims, **characterized in that** the layer of pressure-sensitive adhesive is a foamed layer.

7. Method according to any of the preceding claims, **characterized in that** the plasma emerges from a nozzle and this nozzle is directionally oriented at an angle of 45 to 90° to the liner surface.

**Revendications**

1. Procédé pour l'augmentation de l'adhérence d'une couche de masse autoadhésive comprenant

a) le recouvrement au moins sur un côté de la couche de masse autoadhésive avec un revêtement intérieur anti-adhérent, le revêtement intérieur anti-adhérent étant percé et ainsi perméable au plasma de telle façon que lors d'un recouvrement complet du revêtement intérieur anti-adhérent sur la couche de masse autoadhésive, 10 à 90 % de la surface de la couche de masse autoadhésive est accessible un traitement au plasma ;
b) le traitement avec un plasma de la couche de masse autoadhésive recouverte avec un revêtement intérieur anti-adhérent.

2. Procédé selon la revendication 1, **caractérisé en ce que** le revêtement intérieur anti-adhérent est une structure plane textile.

3. Procédé selon la revendication 2, **caractérisé en ce que** la structure plane textile est un tissu ou une étoffe.

4. Procédé selon la revendication 3, **caractérisé en ce que** le revêtement intérieur anti-adhérent est constitué de fils de chaînes et de trame siliconisés.

5. Procédé selon l'une quelconque des revendications précédentes, **caractérisé en ce que** la couche de masse autoadhésive contient un poly(méth)acrylate en tant qu'ingrédient principal.

6. Procédé selon l'une quelconque des revendications précédentes, **caractérisé en ce que** la couche de masse autoadhésive est moussée.

7. Procédé selon l'une quelconque des revendications précédentes, **caractérisé en ce que** le plasma sort d'une buse et cette buse est orientée d'un angle de 45 à 90° par rapport à la surface du revêtement intérieur.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007063021 A1
- DE 102006057800 A1
- WO 2006027389 A1
- EP 2062951 A1
- WO 9409079 A1
- EP 0168713 B1
- DE 3820294 C1
- US 4725630 A
- DE 3316166 C1

**In der Beschreibung aufgeführte Nicht-Patentliteratur**

- **WAGNER et al.** *Vacuum,* 2003, vol. 71, 417-436
- **R. DITTMEYER et al.** Chemische Technik, Prozesse und Produkte. Wiley-VCH, 2005, vol. 5, 1142